# EUROPEAN PATENT SPECIFICATION

(11) **EP 3 745 988 B1**
(45) Date of publication and mention of the grant of the patent: **12.01.2022**
(21) Application number: 19706753.1
(22) Date of filing: 23.01.2019
(51) Int. Cl.: A61C 1/08, A61C 8/00

(54) **SINGLE-STAGE DENTAL IMPLANT**
EINSTUFIGES DENTALIMPLANTAT
IMPLANT DENTAIRE EN UNE ÉTAPE

(30) Priority: 31.01.2018 IT 201800002265
(43) Date of publication of application: 09.12.2020
(73) Proprietor: Biomec S.r.l., 23823 Colico (LC) (IT)
(72) Inventor: DELLA BELLA, Olivio, 23823 Colico (LC) (IT); MICHELETTI, Romolo, 23823 Colico (LC) (IT); BARILANI, Oscar, 23823 Colico (LC) (IT); BIANCHI, Matteo, 23823 Colico (LC) (IT)
(74) Representative: PGA S.p.A.
(86) International application number: PCT/IB2019/050568
(87) International publication number: WO 2019/150232

(56) References cited:
- EP-A1- 2 266 498
- WO-A1-95/21589
- WO-A1-2017/143107
- WO-A2-2011/101807
- WO-A2-2015/004614
- DE-U1- 9 420 038
- DE-U1-202013 002 300
- US-A- 5 564 926

## Description

### Field of the invention

The present invention regards a single-stage dental implant, preferably for guided surgery. The present invention regards the field of fixed dental implants wherein an endosseous pin is inserted and fixed into the alveolar bone of the jaw/mandible and a prosthesis (artificial tooth) is mounted on the portion of the pin which projects from the gum.

### BACKGROUND OF THE INVENTION

Two-stage implants and single-stage implants are known.

A two-stage implant (two surgical steps - plus assembled components) comprises an endosseous pin inserted into a first surgical stage and an abutment, applied onto the implant in a second surgical stage, which serves as a support for the crown of the artificial tooth. The two components - endosseous pin and abutment - are generally constrained by a third element consisting of a screw. Provided for between the two surgical stages is a time interval, of about 3-6 months, required for a full osseointegration of the endosseous pin. During this period, surgical sealing screws are used, which are screwed onto the endosseous pin at the end of the first surgical stage to seal the endosseous pin after it has been inserted into the alveolar bone. The gums are closed on top of the screw. Once osseointegration is complete, the gums are opened again, the sealing screw is removed and a healing screw - which has the purpose of facilitating the healing of the mucosa - is applied onto the endosseous pin. The prosthesisation of the implant may be carried out after this stage. The healing screw is removed and the abutment - which has the function of connection between the endosseous pin and the crown of the artificial tooth - is chosen and applied.

For example, document WO 2008/157137 illustrates a multi-component dental implant comprising an implantable body (endosseous pin) suitable to be inserted into the patient's bone and a metal support (abutment) which is in turn mechanically coupled to an upper end of the threaded pin. A prosthesis, in form of a ceramic tooth, is then fixed to the support. The implantable body is provided with an inner threaded hole whose axis is inclined with respect to a central axis of the implant.

A single-stage implant (only one surgical stage - a single component) consists of a single element with a threaded portion, configured to be inserted into the bone, an intra-mucosa portion and an extra-mucosa portion which serves as a support for the crown of the artificial tooth. The implant is inserted in a single surgical stage. A temporary prosthesis which has the purpose of limiting loads during the osseointegration period is initially provided above the extra-mucosa portion. Once the tissue healing period (about 3-6 months) one can fit the implant by removing the temporary prosthesis and applying the crown of the artificial tooth.

For example, document WO 2007/010345 illustrates an endosteal implant consisting of a single component comprising a threaded root portion (intra-mucosa portion), designated to be engaged in a hole formed in the bone, and a support portion (extra-mucosa portion) configured to support a dental prosthesis. The support portion and the root portion consist of a single piece. The support portion, designated to carry the artificial tooth, has a central axis thereof inclined with respect to a central axis of the root portion and this allows obtaining better aesthetic results.

Also known are two techniques for inserting the implant into the patient's bone: software-guided surgery and free surgery.

In software-guided surgery, the virtual planning of the surgical intervention is carried out using a specific software. A surgical template is designed using a software and then made concretely. The surgical template serves as a guide for milling machines when making the alveolus and for inserting the implant into the bone. The surgical template consists in a mask with one or more holes at the positions where the implants are inserted. The implant is subsequently inserted into the surgical alveolus passing through the template, guided by a device called "mounter", screwed onto the implant. Once the implant has been positioned in the bone, the "mounter" is unscrewed and removed and then the template is removed from the patient's mouth too.

Documents illustrating surgical guides for example are US9283057 and US2015272704. Furthermore, document US 2009/0239197 illustrates a method for making a surgical guide and a method for fixing a dental implant into a bone. In particular, such document refers to zygomatic dental implants and, in some embodiments, it illustrates a threaded pin with an inclined hole with respect to the axis of the pin.

Furthermore, document WO2017/143107 illustrates a dental pin comprising a threaded part (implant) and an extra-mucosal portion (abutment) which are separate from each other.

Document EP2266498 illustrates a threaded pin inserted into the bone and an assembly formed by several parts which is subsequently screwed onto the threaded pin using a screw.

Document US5564926 illustrates a zygomatic implant configured/dimensioned to be inserted into two holes obtained in the bone and separated by a soft tissue. The length of the implant of US5564926 and/or the distance between the two holes make it impossible to drill the holes and insert the implant by means of a surgical guide, like it instead occurs in guided dental implantology.

No template is used in free surgery. The alveolus is made and the pin is inserted into the bone by the dentist only relying on the experience and ability thereof. No tool is used for guiding the milling machine when drilling the bone.

### Summary

In this context, the Applicant felt the need to improve single-stage dental implants of the known type so as to make the installation of the same in the patient's mouth in an easier, quicker, more precise and safer manner and thus improve the prosthesis as a whole.

In particular, the Applicant felt the need to make the installation of single-stage implants easier through guided surgery, i.e. using a surgical template, even when said implants have an inclined extra-mucosal portion.

In particular, the Applicant observed that it is almost impossible to apply single-stage implants with inclined head of the known type by means of a surgical template given that it is impossible or at least very difficult to insert them through the hole of the surgical template and then remove the "mounter" used to insert them.

In particular, the Applicant set out to achieve the following objectives:
▪ designing a single-stage dental implant that allows obtaining safer prosthesis;
▪ designing a single-stage dental implant that allows making operations for application onto the patient less traumatic for the patient and easier and quicker for the dentist;
▪ designing a single-stage dental implant that can be easily installed even through guided surgery, i.e. using a surgical template;
▪ designing an apparatus for guided dental implantology that allows easy installation of dental implants, in particular single-stage dental implants with inclined head.

In particular, these and other objects are substantially attained by a single-stage dental implant and by an apparatus for guided dental implantology claimed in the attached claims and/or described in the following aspects.

The present invention regards an apparatus for guided dental implantology, according to claim 1. The mounting screw serves, among its functions, to apply to the conical portion of the pin a mounting element (mounter) that can be gripped by a mounting tool (driver) and inserted together with the pin through the template to arrange said pin in the alveolar bone. Thus, the lateral window allows the installation and deinstallation of the mounting element when the threaded hole and screw axes are inclined with respect to the pin.

The single-stage dental implant according to the invention is thus used along with the surgical template to carry out guided surgical interventions.

The Applicant observed that the present invention allows making operations regarding the application of the prosthesis to the patient easier and quicker, thus reducing stress for the patient, facilitating the work of the dentist and guaranteeing the obtainment of safe implants.

In particular, the Applicant observed that the present invention allows applying the pin onto the alveolar bone even through guided surgery, i.e. using the template. The present invention, in at least one of the aforementioned aspects, may have one or more of the further preferred aspects described hereinafter.

In an aspect, the substantially conical portion is substantially frusto-conical shaped.

In an aspect, the threaded hole opens at a tip end of the substantially conical portion.

In an aspect, the substantially conical portion has an opening angle.

In an aspect, an angle of the support platform formed with a plane orthogonal to the central axis is less than or equal to half of the opening angle of the substantially conical portion. This allows applying to the substantially conical portion of the pin the mounting element (mounter) maintaining the axis of such mounting element parallel/coincident with the axis of the pin and with the axis of the cannula of the template. This solution allows making the mounting of single-stage implants with inclined platform easier even using guided surgery, i.e. through the template.

In other words, the relationship between the opening angle of the substantially conical portion and the inclination of the support platform is such that a lateral surface of the substantially conical portion does not for undercuts with a lateral surface of the threaded portion.

In an aspect, the opening angle is comprised between 40° and 90°.

In a preferred aspect, the opening angle is 60° and the angle of the support platform formed with a plane orthogonal to the central axis is greater than 0° and less than or equal to 30°.

In an aspect, the substantially conical portion has two lateral surfaces parallel to one another and orthogonal to the support platform. In other words, the substantially conical portion doers not define a full conical surface but it has two lateral millings that allows transmitting the torque from the mounting element to the pin with small overall dimension.

In an aspect, a distance between the two lateral surfaces is comprised between 2 mm and 3 mm.

In an aspect, the support platform has a circular peripheral edge.

In an aspect, a diameter of the support platform is comprised between 4 mm and 5

In an aspect, the support platform has a support surface delimited between a base of the substantially conical portion and said circular peripheral edge.

In an aspect, the support surface is annular-shaped with enlarged portions at the two lateral surfaces of the substantially conical portion.

In an aspect, the implant, i.e. the pin formed by a single piece, comprises a non-threaded cylindrical portion (or cylindrical neck) interposed between the threaded portion and the support platform and forming a single piece with said threaded portion and support platform.

In an aspect, the implant, i.e. the pin formed by a single piece, comprises an auxiliary conical portion (chalice) interposed between the threaded portion and the support platform, preferably interposed between the non-threaded cylindrical portion and the support platform, where the auxiliary conical portion diverges towards the support platform and it forms a single piece with said threaded portion, support platform and, preferably, non-threaded cylindrical portion.

In an aspect, the non-threaded cylindrical portion and the auxiliary conical portion have a surface with polished finishing, i.e. with roughness below 0.8 Ra.

In an aspect, a base of the auxiliary conical portion carries the substantially conical portion and defines the support platform.

In an aspect, the threaded portion has a single sharp turn, preferably with inclination comprised between 30° and 50°, more preferably at 40°, preferably with a pitch comprised between 0.5 and 1 mm, more preferably equivalent to 0.9 mm. In an aspect, the threaded portion has at least one helical apical cut, preferably a plurality of helical apical cuts, more preferably three helical apical cuts.

In an aspect, the threaded portion has an apex, positioned on an end axially opposite to the substantially conical portion, rounded.

In an aspect, a diameter of the threaded portion (measured on the crest of the threading) is comprised between 3 mm and 5 mm

In an aspect, a length of the implant is comprised between 7 mm and 15 mm.

In an aspect, the guide cannula has lateral planes to ensure a correct orientation of said guide cannula in the surgical template.

In an aspect, the guide cannula has an outer surface provided with said lateral planes.

In an aspect, the guide cannula has an inner diameter comprised between 4 mm and 6 mm, preferably 5 mm.

In an aspect, the guide cannula has at least one radial edge in relief.

In an aspect, the lateral window has a maximum height, measured along an axis of the guide cannula, comprised between 2 mm and 3 mm.

In an aspect, said at least one radial edge in relief is arranged at the lateral window.

In an aspect, the apparatus comprises a mounting element (mounter) removably mounted on the single stage dental implant by means of the mounting screw, wherein the mounting element has an end configured to be engaged by a mounting tool.

In an aspect, the mounting element has a seat, preferably substantially conical, configured to be engaged on the substantially conical portion of the pin.

In an aspect, the seat has two flat and parallel surfaces configured to be coupled to the two lateral surfaces of the substantially conical portion.

In an aspect, the mounting element has a through opening communicating with said substantially conical seat and configured to house at least one head of the mounting screw.

In an aspect, the substantially conical seat and the through opening have an inclined axis with respect to a central axis of the mounting element.

In an aspect, an end of the mounting element on which the seat opens has a surface for coupling with the support platform.

In an aspect, the coupling surface is inclined with respect to a plane orthogonal to the central axis of the mounting element.

In an aspect, when mounted on the single-stage dental implant, the mounting element has its central axis coinciding with the central axis of the threaded portion of said single-stage dental implant.

Further characteristics and advantages will be more apparent from the detailed description of a preferred but non-exclusive embodiment of a single-stage dental implant and an apparatus for guided dental implantology, according to the present invention.

### Description of the drawings

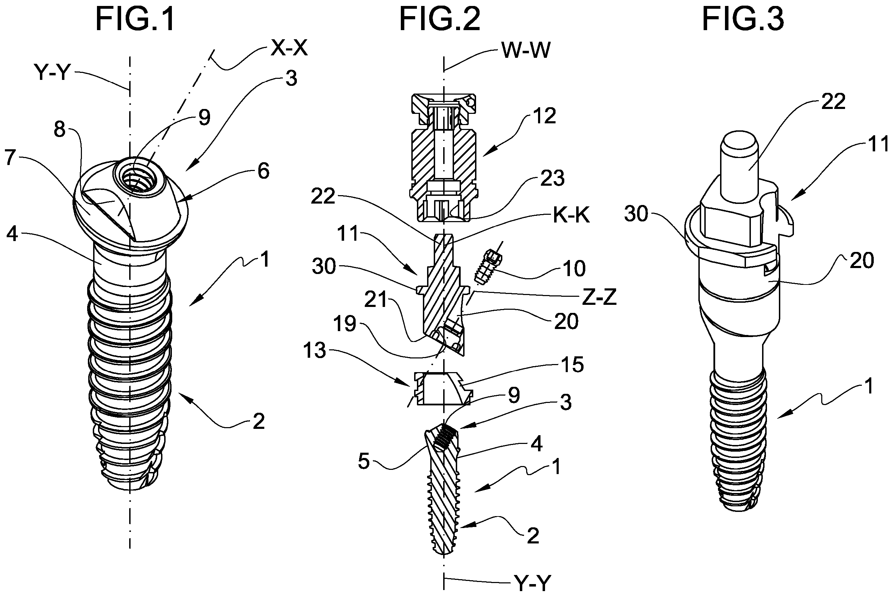

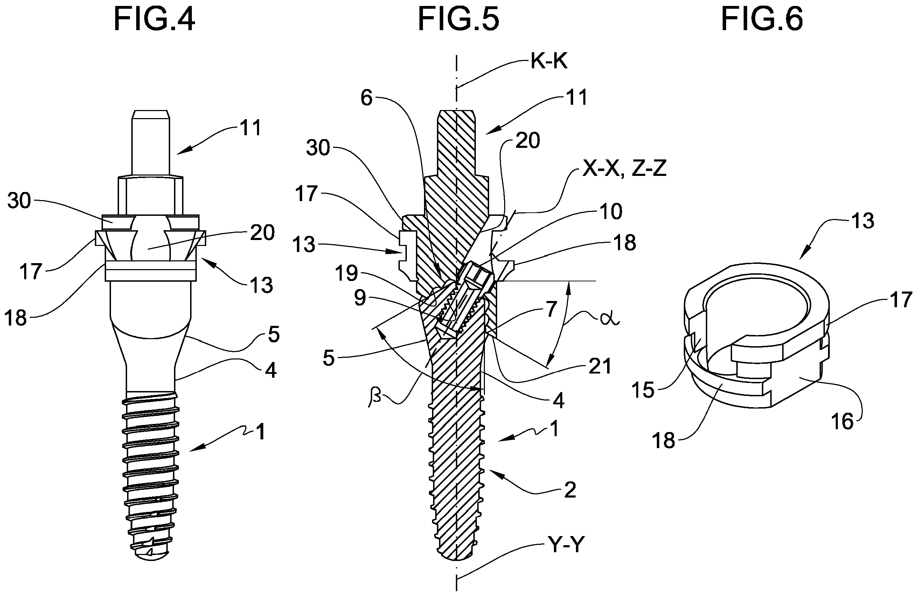

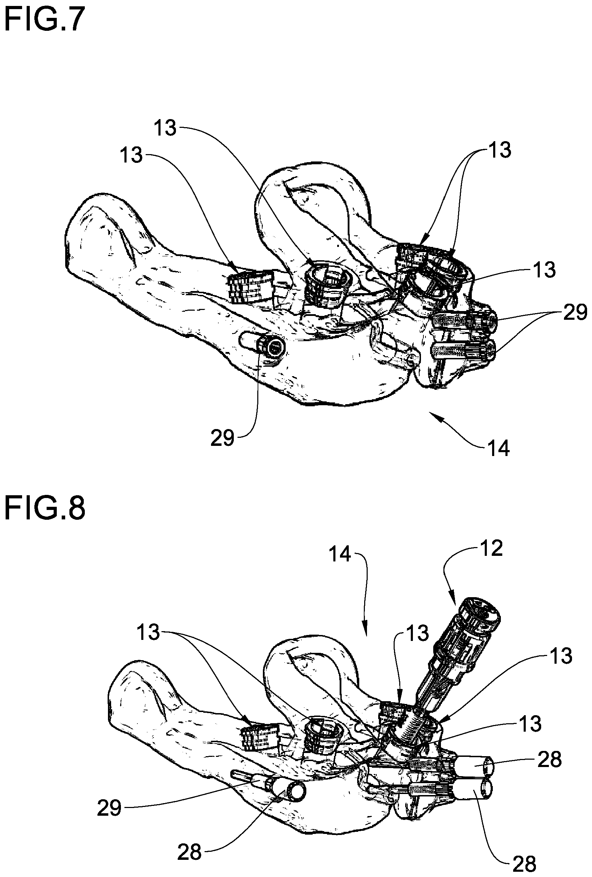

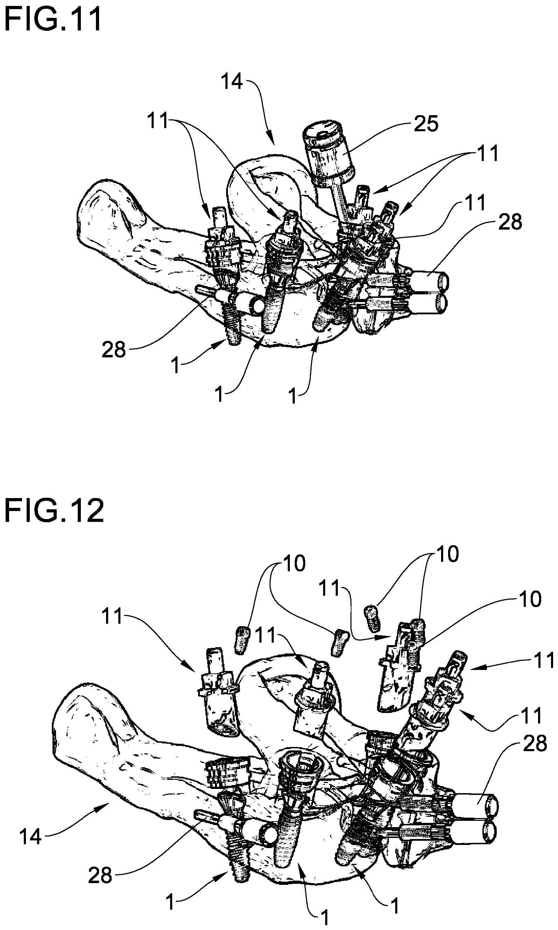

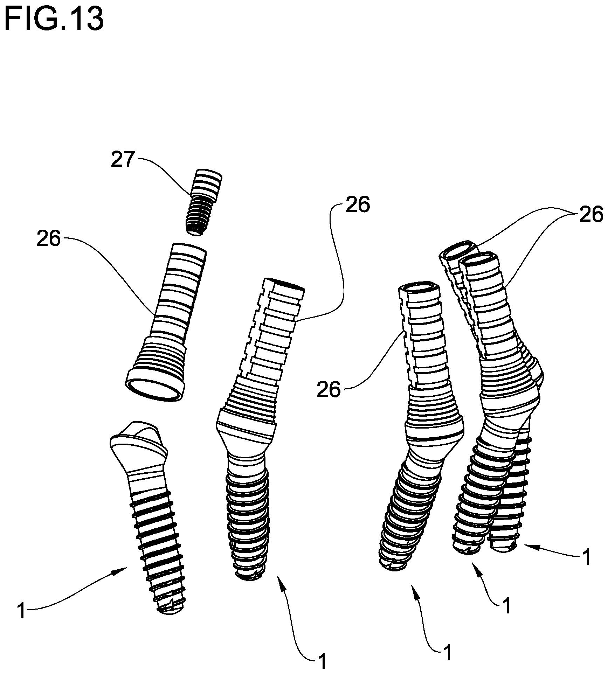

Such description will be outlined hereinafter with reference to the attached drawings, provided solely for by way of non-limiting example, wherein:
▪ figure 1 illustrates a single-stage dental implant according to the invention;
▪ figure 2 illustrates an exploded assembly comprising the implant of figure 1;
▪ figure 3 illustrates some elements of the assembly of figure 2 assembled to each other;
▪ figure 4 illustrates all elements of the assembly of figure 2 assembled to each other;
▪ figure 5 illustrates a section of the assembly of figure 4;
▪ figure 6 illustrates one of the elements of the assembly of figures 2 and 4;
▪ figure 7 illustrates a surgical template incorporating several elements, each like that of figure 6;
▪ figures 8 - 13 illustrate respective operative steps for the installation of implants according to the invention.

### Detailed description

With reference to the aforementioned figures, a single-stage dental implant according to the invention was indicated in its entirety with reference 1. The implant 1 is formed by a single body defined by a pin preferably made of titanium alloy and having a central axis "Y-Y".

The pin has a threaded portion 2 which extends up to a tip end of the pin 1 and it is configured to be firmly fixed into the patient's bone. The threaded portion 2 preferably has a single sharp turn, for example at 40° and with a pitch for example measuring 0.9 mm. The threaded portion 2 has three helical apical cuts arranged at the tip end, and an apex, positioned on the tip end, rounded.

Furthermore, the pin has an extra-mucosal portion 3 arranged at an end of the threaded portion 2 opposite to the tip end. The threaded portion 2 is connected to the extra-mucosal portion 3 through a non-threaded cylindrical portion 4 (or cylindrical neck) and an auxiliary conical portion 5 (chalice). The non-threaded cylindrical portion 4 and the auxiliary conical portion 5 have a surface with polished finishing, i.e. for example with a roughness of about 0.8 Ra.

As previously specified, the threaded portion 2, the extra-mucosal portion 3, the non-threaded cylindrical portion 4 and the auxiliary conical portion 5 are made in a single piece.

The extra-mucosal portion 3 has a substantially conical portion 6 and a support platform 7 arranged at the base and around the substantially conical portion 6. The substantially conical portion 6 is actually frusto-conical-shaped with a larger base connected to the support platform 7 and a free smaller base. The substantially conical portion 6 does not define a full conical surface but it has two lateral millings that form two respective lateral surfaces 8 (only one of which is visible in figure 1) parallel to one another and orthogonal to the support platform 7. Such lateral surfaces 8 allows effectively transmitting a tightening torque to the pin, as described hereinafter, and it does this with a small overall dimension. In the illustrated embodiment, the substantially conical portion 6 has an opening angle "β" of about 60°.

The non-threaded cylindrical portion 4 is interposed between the threaded portion 2 and the support platform 7, the auxiliary conical portion 5 diverges towards the support platform 7 and a base of the auxiliary conical portion 5 carries the substantially conical portion 6 and defines the support platform 7.

The support platform 7 has a circular peripheral edge and a support surface delimited between a base of the substantially conical portion 6 and said circular peripheral edge. As better observable from figure 1, the support surface is annular-shaped with enlarged portions at the two lateral surfaces 8 of the substantially conical portion 6.

A threaded hole 9 configured to receive a mounting screw 10 is obtained in the substantially conical portion 6. In particular, the threaded hole 9 opens on the free smaller base of the substantially conical portion 6. Furthermore, the substantially conical portion 6 and the threaded hole 9 have a common axis "X-X" orthogonal to the support platform 7.

The common axis "X-X" is inclined with respect to the central axis "Y-Y" of the pin. In particular, in the illustrated embodiment, the common axis "X-X" and central axis "Y-Y" mutually delimit an acute angle of about 30°. The common axis "X-X" is perpendicular to the support platform 7, hence said support platform 7 and the substantially conical portion 6 are inclined with respect to an ideal plane orthogonal to the central axis "Y-Y" of the implant 1. As better observable in figure 5, the angle "α" that the support platform 7 forms with the plane orthogonal to the central axis "Y-Y" measures about 30°.

Despite the embodiment illustrated in the attached figures showing an opening angle "β" of about 60° and the angle "α" of about 30°, these specific values shall not be deemed limiting. However, advantageously and preferably, the angle "α" is less than or equal to half the of the opening angle "β". In other words, the relationship between the opening angle "β" and the inclination of the support platform 7 is such that a lateral surface of the substantially conical portion 6 does not form undercuts with a lateral surface of the threaded portion 2 and the non-threaded cylindrical portion 4. This geometric solution allows making the mounting of single-stage implants with inclined platform easier even through guided surgery, i.e. through a template, as will be illustrated hereinafter.

By way of example, a diameter of the threaded portion 2 (measured on the bottom of the threading) and of the non-threaded cylindrical portion 4 may for example be comprised between 3 mm and 5 mm, depending on the size of the implant 1. A length of the implant 1, measured from the tip end of the pin up to the plane arranged at the non-threaded cylindrical portion 4 and distant 1 mm from the threaded portion, is comprised between 10 mm and 15 mm, depending on the size of the implant 1. Furthermore, if the opening angle "β" measures 60°, angle "α" is comprised between 0° and 30°. The mounting screw 10 can for example be an M 1.8. A diameter of the support platform is for example 5 mm, preferably 4.8 mm. A distance between the two lateral surfaces 8 is about 2.5 mm, preferably 2.6 mm. According to the invention, figure 2 illustrates the single stage dental implant 1 described above combined with a mounting element 11 (generally known by the term mounter), with a mounting tool 12 (generally known by the term driver) and with a guide cannula 13 part of a surgical template 14, illustrated in its entirety in figures 7 to 12.

The template 14, per se known except for the geometry of the guide cannula(s) 13, comprises a body, for example made of resin, provided with through holes. Housed inside each of the holes are respective guide cannulas 13 (embedded in the resin) according to the invention which have the purpose of guiding the dentist to position the implants 1 in the exact designed point.

Each guide cannula 13 according to the invention (figures 2, 4 and 6) is made, for example, of AISI 303 steel and comprises a substantially cylindrical body delimiting an inner duct dimensioned to allow the guided through-passing of the implant 1 and of at least part of the mounting element 11.

In particular, the substantially cylindrical body has an inner cylindrical surface with an inner diameter slightly larger than the diameter of the support platform 7, i.e. for example measuring about 5 mm if the diameter of the support platform 7 measures 4.8 mm. The substantially cylindrical body is provided with a lateral window 15 which extends from an upper edge thereof (the expression upper edge is used to indicate the edge which - in the surgical template - remains arranged in proximity of the surface of said template opposite to the one associated to the patient, i.e. it is the edge that remains facing the operator/dentist during the operations of installing the implant 1) and it is configured to allow access to the mounting screw 10 housed in the threaded hole 9 of the single-stage dental implant 1 when said single-stage dental implant 1 is positioned in the guide cannula 13 and in the patient's bone. The substantially cylindrical body has a first circumferential portion with a first constant axial height and a second circumferential portion, arranged at the window 15, with a second smaller axial height with respect to the first axial height. The second axial height is lesser than half of the first axial height. In other words, the lateral window 15 has a maximum height, measured along an axis of the guide cannula 13, of about 2 mm.

The guide cannula 13 has an outer surface provided with two diametrically opposite and mutually parallel lateral planes 16 which serve to prevent the rotation thereof with respect to the surgical template 14 and thus ensure the correct orientation thereof in the surgical template 14.

A first radial edge 17 in relief extends radially towards the external and it is arranged at the upper edge of the substantially cylindrical body. A second radial edge 18 in relief extends radially towards the external and it is axially spaced from the first radial edge 17. The lateral window 15 interrupts the first radial edge 17 in relief and it is delimited by a second radial edge 18 in relief.

The mounting element 11 (illustrated also in figures 3, 4 and 5) has a first end provided with a seat 19 configured to be engaged on the substantially conical portion 6 of the implant 1. The seat 19 is substantially counter-shaped with respect to said substantially conical portion 6 so that a torque generated on the mounting element 11 can be transmitted to the implant 1. For example, the seat 19 is substantially conical and it has two flat and parallel surfaces configured to be coupled to the two lateral surfaces 8 of the substantially conical portion 6.

The mounting element 11 has a through opening 20 communicating with said seat 19 and configured to house at least one head of the mounting screw 10 (see figure 5). The through opening 20 opens on a lateral portion of the mounting element 11 and - furthermore - the seat 19 and the through opening 20 have an axis "Z-Z" inclined with respect to the central axis "K-K" of the mounting element 11 by an angle equivalent to the angle "α".

The first end of the mounting element 11, on which the seat opens 19, has a coupling surface 21 with the support platform 7 which is inclined with respect to a plane orthogonal to the central axis "K-K" of the mounting element 11 by an angle equivalent to angle "α". In other words, said first end is cut in a "slash cut" manner. Thus, the mounting element 11 is removably mounted on the single-stage dental implant 1 using the mounting screw 10.

A second end of the mounting element 11, opposite to the first end, is geometrically shaped to be engaged by the mounting tool 12 so that said mounting tool 12 can transmit a torque to the mounting element 11 (and from the latter to the implant 1). For example, the second end of the mounting element 11 is provided with a projection 22 configured to be housed in a recess 23 of the mounting tool 12.

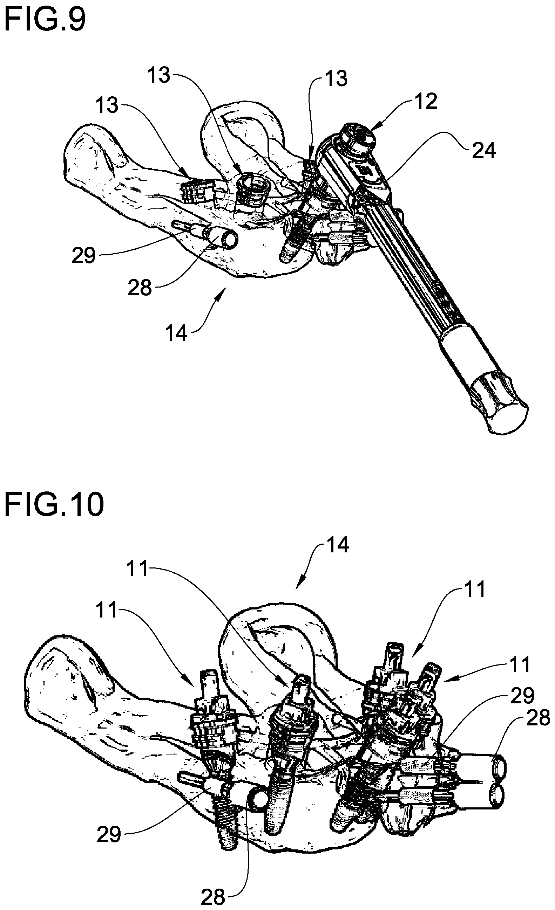

The mounting tool 12 also has a substantially tubular structure with a central axis "W-W" thereof and it is provided with a radially external portion configured to be engaged by a torque wrench 24 (figure 9).

When the mounting element 11 is mounted on the single-stage dental implant 1 and the mounting tool 12 is associated to the mounting element 11, the central axes "Y-Y", "W-W", "K-K" coincide and axes "X-X" and "Z-Z" coincide.

The surgical template 14 illustrated above with one or more guide cannulas 13, along with one or more single-stage dental implants 1 and with one or more mounting elements 11 and at least one mounting tool 12 form an apparatus for guided dental implantology according to the invention.

In order to carry out the application of the implant(s) 1 to the patient, designed and made in advance is the surgical template 14 with the special guide cannulas 13 with the window 15 oriented according to the final position of the prosthesis (figure 7). The surgical template 14 is positioned and fixed temporarily in the patient's mouth using fixing pins 28 passing through special cannulas 29 for the fixing pins 28 incorporated in the template 14 (figures 7-11).

Using milling machines, even of the known and not described type, inserted through the guide cannulas 13, holes are drilled in the patient's alveolar bone. Assemblies - each formed (as illustrated in figure 3) by an implant 1 and by a disposable mounting element 11 pre-mounted on the implant using the screw 10 - are then removed from the respective packagings.

The mounting tool 12 is positioned on the mounting element 11 and the implant is inserted through the guide cannula in the previously drilled hole in the alveolar bone initially manually (figure 8), and then the insertion is completed using a torque wrench 24 (figure 9) up to bringing an annular edge 30 of the mounting element 11 against the upper edge of the guide cannula 13 (like in figures 4 and 5) and taking care to orient the through opening 20 and the mounting screw 10 towards the lateral window 15.

The mounting tool 12 and the torque wrench 24 are then removed from the mounting element 11 and the operation is repeated for all implants (figure 10). Then all mounting elements 11 are removed by unscrewing the mounting screws 10, which lie exposed through each lateral window 15, using a screwdriver 25 (figures 11 and 12) and removing them through said lateral window 15.

The surgical template 13 is removed from the patient's mouth and on each implant 1, by means of a stub screw 27 housed in the threaded hole 9, it is possible to apply a stub 26 suitable to support the actual aesthetic prosthesis (artificial crown). The described surgical template 14 provided with the guide cannulas 13 having a lateral window 15 according to the present invention can theoretically be used with dental implants different from the described one which require or not access to a lateral screw.

### Elements list

- 1: single-stage dental implant
- 2: threaded portion
- 3: extra-mucosal portion
- 4: non-threaded cylindrical portion
- 5: auxiliary conical portion
- 6: substantially conical portion
- 7: support platform
- 8: lateral surfaces
- 9: threaded hole
- 10: mounting screw
- 11: mounting element
- 12: mounting tool
- 13: guide cannula
- 14: surgical template
- 15: lateral window
- 16: lateral planes
- 17: first radial edge
- 18: second radial edge
- 19: seat
- 20: through opening
- 21: coupling surface
- 22: projection
- 23: recess
- 24: torque wrench
- 25: screwdriver
- 26: stub
- 27: stub screw
- 28: fixing pin
- 29: cannula for fixing pin
- 30: annular edge
- Y-Y: pin central axis
- X-X: threaded hole axis
- Z-Z: through opening axis
- K-K: mounting element central axis
- W-W: mounting tool central axis
- β: opening angle
- α: angle of the support platform

## Claims

1. Apparatus for guided dental implantology, comprising:
a surgical template (14) having at least one hole and at least one guide cannula (13) housed in said at least one hole;
at least one single-stage dental implant (1) insertable through the guide cannula (13);
wherein the single-stage dental implant comprises a pin formed by a single piece;
wherein the pin formed by a single piece has a threaded portion (2), configured to be inserted into a patient's bone, and an extra-mucosal portion (3) placed at an end of the threaded portion (2);
wherein the extra-mucosal portion (3) has a substantially conical portion (6), a support platform (7) placed at the base of and at least partially around the substantially conical portion (6); wherein a threaded hole (9), configured to house a mounting screw (10), is formed in the substantially conical portion (6);
wherein the substantially conical portion (6) and the threaded hole (10) have a common axis (X-X) orthogonal to the support platform (7);
wherein the threaded portion (2) has a central axis (Y-Y);
wherein the common axis (X-X) is inclined with respect to the central axis (Y-Y);
wherein the guide cannula (13) has a lateral window (15) extending from an upper edge thereof and configured to allow access to the mounting screw (10) housed in the threaded hole (9) of the single-stage dental implant (1).

2. Apparatus according to claim 1, wherein the substantially conical portion (6) has an opening angle (β); wherein an angle (α) of the support platform (7) formed with a plane orthogonal to the central axis (Y-Y) is less than or equal to half of the opening angle (β) of the substantially conical portion (6).

3. Apparatus according to claim 2, wherein the opening angle (β) is comprised between 40° and 90° and wherein the angle (α) of the support platform (7) is greater than 0° and smaller than or equal to 30°.

4. Apparatus according to claim 1 or 2 or 3, wherein the substantially conical portion (6) has two lateral surfaces (8) parallel to one another and orthogonal to the support platform (7).

5. Apparatus according to one of claims 1 to 4, wherein the support platform (7) has a circular peripheral edge.

6. Apparatus according to claim 5, wherein the support platform (7) has a support surface delimited between a base of the substantially conical portion (6) and said circular peripheral edge.

7. Apparatus according to one of claims 1 to 6, wherein the pin formed by a single piece comprises a non-threaded cylindrical portion (4) interposed between the threaded portion (2) and the support platform (7) and forming a single piece with said threaded portion (2) and support platform (7).

8. Apparatus according to one of claims 1 to 7, wherein the pin formed by a single piece comprises an auxiliary conical portion (5) interposed between the threaded portion (2) and the support platform (7), wherein the auxiliary conical portion (5) diverges towards the support platform (7) and forms a single piece with said threaded portion (2) and support platform (7).

9. Apparatus according to claim 8, wherein a base of the auxiliary conical portion (5) carries the substantially conical portion (6) and defines a support platform (7).

10. Apparatus according to any of claims 1 to 9, wherein the guide cannula (13) has lateral planes (16) to ensure a correct orientation of said guide cannula (13) in the surgical template (14).

11. Apparatus according to any of claims 1 to 10, comprising a mounting element (11) removably mounted on the single-stage dental implant (1) by means of the mounting screw (10); wherein the mounting element (11) has an end configured to be engaged by a mounting tool (12).

12. Apparatus according to claim 11, wherein, when mounted on the single-stage dental implant (1), the mounting element (11) has its own central axis (K-K) coinciding with the central axis (Y-Y) of the threaded portion (2) of said single-stage dental implant (1).

13. Apparatus according to claim 11 or 12, wherein the mounting element (11) has a seat (19) configured to be engaged on the substantially conical portion (6) of the pin.

## Patentansprüche

1. Vorrichtung für geführte Dental-Implantologie, umfassend:
eine chirurgische Matrize (14), welche wenigstens ein Loch aufweist, sowie wenigstens eine Führungskanüle (13), welche in dem wenigstens einen Loch aufgenommen ist;
wenigstens ein einstufiges Zahnimplantat (1), welches durch die Führungskanüle (13) einführbar ist;
wobei das einstufige Zahnimplantat einen Stift umfasst, welcher durch ein einzelnes Stück gebildet ist;
wobei der durch ein einzelnes Stück gebildete Stift einen Gewindeabschnitt (2) aufweist, welcher dazu eingerichtet ist, in einen Knochen eines Patienten eingesetzt zu werden, sowie einen extramukosalen Abschnitt (3), welcher an einem Ende des Gewindeabschnitts (2) platziert ist;
wobei der extramukosale Abschnitt (3) einen im Wesentlichen konischen Abschnitt (6) aufweist, wobei eine Trageplattform (7) an der Basis von und
wenigstens teilweise um den im Wesentlichen konischen Abschnitt (6) herum platziert ist; wobei ein Gewindeloch (9), welches dazu eingerichtet ist, eine Montageschraube (10) aufzunehmen, in dem im Wesentlichen konischen Abschnitt (6) gebildet ist;
wobei der im Wesentlichen konische Abschnitt (6) und das Gewindeloch (10) eine gemeinsame Achse (X-X) orthogonal zu der Trageplattform (7) aufweisen;
wobei der Gewindeabschnitt (2) eine zentrale Achse (Y-Y) aufweist;
wobei die gemeinsame Achse (X-X) bezüglich der zentralen Achse (Y-Y) geneigt ist;
wobei die Führungskanüle (13) ein laterales Fenster (15) aufweist, welches sich von einem oberen Rand davon erstreckt und dazu eingerichtet ist, einen Zugang zu der Montageschraube (10) zu erlauben, welche in dem Gewindeloch (9) des einstufigen Zahnimplantats (1) aufgenommen ist.

2. Vorrichtung nach Anspruch 1, wobei der im Wesentlichen konische Abschnitt (6) einen Öffnungswinkel (β) aufweist; wobei ein Winkel (α) der Trageplattform (7), welcher mit einer Ebene orthogonal zu der zentralen Achse (Y-Y) gebildet ist, kleiner oder gleich dem halben Öffnungswinkel (β) des im Wesentlichen konischen Abschnitts (6) ist.

3. Vorrichtung nach Anspruch 2, wobei der Öffnungswinkel (β) zwischen 40° und 90° beträgt, und wobei der Winkel (α) der Trageplattform (7) größer als 0° und kleiner oder gleich 30° ist.

4. Vorrichtung nach Anspruch 1 oder 2 oder 3, wobei der im Wesentlichen konische Abschnitt (6) zwei laterale Flächen (8) parallel zueinander und orthogonal zu der Trageplattform (7) aufweist.

5. Vorrichtung nach einem der Ansprüche 1 bis 4, wobei die Trageplattform (7) einen kreisförmigen Umfangsrand aufweist.

6. Vorrichtung nach Anspruch 5, wobei die Trageplattform (7) eine Tragefläche aufweist, welche zwischen einer Basis des im Wesentlichen konischen Abschnitts (6) und dem kreisförmigen Umfangsrand begrenzt ist.

7. Vorrichtung nach einem der Ansprüche 1 bis 6, wobei der Stift, welcher durch ein einzelnes Stück gebildet ist, einen zylindrischen Abschnitt (4) ohne Gewinde umfasst, welcher zwischen dem Gewindeabschnitt (2) und der Trageplattform (7) eingefügt ist und ein einzelnes Stück mit dem Gewindeabschnitt (2) und der Trageplattform (7) bildet.

8. Vorrichtung nach einem der Ansprüche 1 bis 7, wobei der Stift, welcher durch ein einzelnes Stück gebildet ist, einen konischen Hilfsabschnitt (5) umfasst, welcher zwischen dem Gewindeabschnitt (2) und der Trageplattform (7) eingefügt ist, wobei der konische Hilfsabschnitt (5) in Richtung der Trageplattform (7) divergiert und ein einzelnes Stück mit dem Gewindeabschnitt (2) und der Trageplattform (7) bildet.

9. Vorrichtung nach Anspruch 8, wobei eine Basis des konischen Hilfsabschnitts (5) den im Wesentlichen konischen Abschnitt (6) trägt und eine Trageplattform (7) definiert.

10. Vorrichtung nach einem der Ansprüche 1 bis 9, wobei die Führungskanüle (13) laterale Ebenen (16) aufweist, um eine korrekte Orientierung der Führungskanüle (13) in der chirurgischen Matrize (14) sicherzustellen.

11. Vorrichtung nach einem der Ansprüche 1 bis 10, umfassend ein Montageelement (11), welches lösbar an dem einstufigen Zahnimplantat (1) mittels der Montageschraube (10) montiert ist; wobei das Montageelement (11) ein Ende aufweist, welches dazu eingerichtet ist, durch ein Montagewerkzeug (12) eingegriffen zu werden.

12. Vorrichtung nach Anspruch 11, wobei wenn es an dem einstufigen Zahnimplantat (1) montiert ist, das Montageelement (11) seine eigene zentrale Achse (K-K) mit der zentralen Achse (Y-Y) des Gewindeabschnitts (2) des einstufigen Zahnimplantats (1) zusammenfallend aufweist.

13. Vorrichtung nach Anspruch 11 oder 12, wobei das Montageelement (11) einen Sitz (19) aufweist, welcher dazu eingerichtet ist, an dem im Wesentlichen konischen Abschnitt (6) des Stifts eingegriffen zu sein.

## Revendications

1. Appareil d'implantologie dentaire guidée, comprenant :
un guide chirurgical (14) ayant au moins un trou et au moins une canule de guidage (13) logée dans ledit au moins un trou ;
au moins un implant dentaire à étage unique (1) pouvant être inséré à travers la canule de guidage (13) ;
l'implant dentaire à étage unique comprenant une goupille formée d'une pièce unique ;
la goupille formée d'une pièce unique ayant une portion filetée (2), conçue pour être insérée dans un os d'un patient, et une portion extra-mucosale (3) placée au niveau d'une extrémité de la portion filetée (2) ;
la portion extra-mucosale (3) ayant une portion sensiblement conique (6), une plateforme de support (7) placée à la base de, et au moins entourant partiellement, la portion sensiblement conique (6) ; un trou fileté (9), conçu pour loger une vis de montage (10), étant formé dans la portion sensiblement conique (6) ;
la portion sensiblement conique (6) et le trou fileté (10) ayant un axe commun (X-X) orthogonal par rapport à la plateforme de support (7) ;
la portion filetée (2) ayant un axe central (Y-Y) ;
l'axe commun (X-X) étant incliné par rapport à l'axe central (Y-Y) ;
la canule de guidage (13) ayant une fenêtre latérale (15) s'étendant depuis son bord supérieur et conçue pour permettre l'accès à la vis de montage (10) logée dans le trou fileté (9) de l'implant dentaire à étage unique (1).

2. Appareil selon la revendication 1, la portion sensiblement conique (6) ayant un angle d'ouverture (β) ; un angle (α) de la plateforme de support (7) formé avec un plan orthogonal par rapport à l'axe central (Y-Y) étant inférieur ou égal à la moitié de l'angle d'ouverture (β) de la portion sensiblement conique (6).

3. Appareil selon la revendication 2, l'angle d'ouverture (β) étant compris entre 40° et 90° et l'angle (α) de la plateforme de support (7) étant supérieur à 0° et inférieur ou égal à 30°.

4. Appareil selon la revendication 1 ou 2 ou 3, la portion sensiblement conique (6) ayant deux surfaces latérales (8) parallèles l'une par rapport à l'autre et orthogonales par rapport à la plateforme de support (7).

5. Appareil selon l'une des revendications 1 à 4, la plateforme de support (7) ayant un bord périphérique circulaire.

6. Appareil selon la revendication 5, la plateforme de support (7) ayant une surface de support délimitée entre une base de la portion sensiblement conique (6) et ledit bord périphérique circulaire.

7. Appareil selon l'une des revendications 1 à 6, la goupille formée d'une pièce unique comprenant une portion cylindrique non filetée (4) interposée entre la portion filetée (2) et la plateforme de support (7) et formant une pièce unique avec lesdites portion filetée (2) et plateforme de support (7).

8. Appareil selon l'une des revendications 1 à 7, la goupille formée d'une pièce unique comprenant une portion conique auxiliaire (5) interposée entre la portion filetée (2) et la plateforme de support (7), la portion conique auxiliaire (5) divergeant vers la plateforme de support (7) et formant une pièce unique avec lesdites portion filetée (2) et plateforme de support (7).

9. Appareil selon la revendication 8, une base de la portion conique auxiliaire (5) portant la portion sensiblement conique (6) et définissant une plateforme de support (7).

10. Appareil selon l'une quelconque des revendications 1 à 9, la canule de guidage (13) ayant des plans latéraux (16) pour garantir une orientation correcte de ladite canule de guidage (13) dans le guide chirurgical (14).

11. Appareil selon l'une quelconque des revendications 1 à 10, comprenant un élément de montage (11) monté de manière amovible sur l'implant dentaire à étage unique (1) à l'aide de la vis de montage (10) ; l'élément de montage (11) ayant une extrémité conçue pour être engagée par un outil de montage (12).

12. Appareil selon la revendication 11, lorsque monté sur l'implant dentaire à étage unique (1), l'élément de montage (11) ayant son propre axe central (K-K) coïncidant avec l'axe central (Y-Y) de la portion filetée (2) dudit implant dentaire à étage unique (1).

13. Appareil selon la revendication 11 ou 12, l'élément de montage (11) ayant un siège (19) conçu pour être engagé sur la portion sensiblement conique (6) de la goupille.
